# EUROPEAN PATENT SPECIFICATION

(11) **EP 4 148 571 B1**
(45) Date of publication and mention of the grant of the patent: **29.10.2025**
(21) Application number: 22194214.7
(22) Date of filing: 06.09.2022
(51) Int. Cl.: G06F 9/50

(54) **OVERLAPPED GEOMETRY PROCESSING IN A MULTICORE GPU**
VERARBEITUNG ÜBERLAPPENDER GEOMETRIE IN EINER MEHRKERN-GPU
TRAITEMENT DE GÉOMÉTRIE SUPERPOSÉE DANS UN GPU MULTIC UR

(30) Priority: 08.09.2021 GB 202112796
(43) Date of publication of application: 15.03.2023
(73) Proprietor: Imagination Technologies Limited, Kings Langley, Hertfordshire WD4 8LZ (GB)
(72) Inventor: NOTTON, Chris, Enfield (GB)
(74) Representative: Elkington and Fife LLP

(56) References cited:
- US-A1- 2019 213 776
- US-A1- 2021 096 921

## Description

### BACKGROUND

In computer graphics, "rendering" is the process of converting a 3D model, describing a virtual scene, into one or more 2D images, representing a view of the scene from a specific viewpoint (or viewpoints). As this is a computationally intensive process, for typical virtual scenes, it is common to provide a hardware accelerator that is specialised in carrying out the necessary computations. This kind of hardware accelerator is known in the art as a graphics processing unit (GPU).

Different GPUs may have different hardware architectures, reflecting different strategies for carrying out the computations necessary for 3D rendering. One exemplary GPU uses a "tile-based deferred rendering" pipeline.

This approach separates the rendering process into two distinct stages. Firstly, geometry data, describing the 3-D model of the scene, is processed to transform it from the 3-D space into the 2-D coordinates of the image, based on the particular viewpoint to be rendered. This will be referred to as the geometry processing phase (or simply geometry phase, for short). The output of this phase is transformed geometry, which is stored in a "parameter buffer" in so-called "parameter blocks".

The transformed geometry in the parameter buffer will be used to define "fragments". Therefore, the second stage is referred to as "fragment shading" or "fragment processing". It may also be referred to as the "3D" stage.

In the second stage, the transformed geometry data is read from the parameter buffer and rasterised - meaning converted to fragments and mapped to pixels. As part of this process, depth-testing is performed to determine what fragments are actually visible at each pixel. In a deferred rendering system, only when the system has determined what fragments are visible does the GPU proceed to retrieve texture data (containing colour information) for the relevant visible fragments. A shader program is run for each visible fragment, and the shaded fragments are used to determine the pixel values to be displayed.

This deferred rendering approach has the benefit of avoiding running the texturing and shading process for surfaces (fragments) that will ultimately be hidden behind other fragments in the scene. Only the fragments nearest the virtual camera (i.e. viewpoint) need to be shaded.

The two stages, geometry and fragment shading, can be run in a pipelined manner. For example, the geometry processing associated with the next render can be processed while the fragment shading for the previous render is being processed. A frame, as displayed on screen, may be a composition of the outputs of multiple renders. It should therefore be understood that, although a "render" may sometimes produce an image ready for display, it may also produce an intermediate product, such as a texture or a light map. Such intermediate products may be used as an input by another render. The pipelined processing of renders may include pipelined processing of different renders that will be used for the same frame, as well as different renders that will be used for different frames.

Tile-based refers to the fact that the rendering space is subdivided into multiple rectangular blocks, or "tiles". It is to accommodate these tiles that the process is split into separate geometry and fragment phases. More specifically, during the geometry processing phase, the transformed geometry can be split up, tile by tile, to create a set of tile lists, also known as tile control streams, indicating which items of geometry data are present in each tile. These tile lists are also stored in the aforementioned parameter buffer. The tiles can then be processed by the fragment shading stage substantially independently of one another. Fragment processing and shading is performed for each individual tile, using the tile lists to retrieve the relevant geometry for the tile and producing pixel (colour) values for the blocks of pixels corresponding to that tile.

The tile-based approach facilitates greater data locality. The set of geometry fragments in each tile is typically a small subset of the overall set of fragments. Therefore, the fragment processing can be carried out with a much smaller memory allocation than if the whole image were to be processed in one pass.

Tiling can also facilitate parallel processing to some extent. In particular, because the texturing/shading can be performed independently for different tiles, the fragment shading for different tiles can be allocated to separate GPU cores, in a multicore architecture.

The geometry processing stage cannot be simply parallelised in the same way, because it is not possible to know in advance (that is, before doing the geometry processing) which geometry data will appear in which tile.
US 2021/0096921 discloses a method for executing commands on a GPU. A first command is fetched for execution on a GPU. Dependency information for the first command, which indicates a number of parent commands that the first command depends on, is determined. The first command is inserted into an execution graph based on the dependency information. A wait count for the first command, which indicates the number of parent commands of the first command, is determined based on the execution graph. The first command is inserted into cache memory in response to determining that the wait count for the first command is zero or that each of the number of parent commands the first command depends on has already been inserted into the cache memory.
US 2019/0213776 discloses a method of scheduling graphics commands for processing. A plurality of micro-commands is generated based on one or more graphics commands obtained from a central processing unit. The dependency between the one or more graphics commands is then determined and an execution graph is generated based on the determined dependency. A wait count is defined for each micro-command of the execution graph, where the wait count indicates the number of micro-commands that each particular micro-command depends on. One or more micro-commands with a wait count of zero are transmitted to a ready queue for processing.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A multicore graphics processing unit (GPU) and a method of operating a GPU are provided. The GPU comprises at least a first core and a second core. A client driver writes a series of geometry commands in the command buffer, along with associated dependency data that indicates the extent to which correct execution of the geometry commands is dependent on the completion of execution of other commands. The first core reads a first geometry command from the command buffer and executes it. The second core reads a second geometry command from the command buffer. The second core determines that the second geometry command is not dependent on the results of the first geometry command, and, in response, executes the second geometry command.

According to one aspect, there is provided a method of operating a multicore graphics processing unit, hereinafter GPU, configured to perform tile-based rendering, to enable overlapping processing of geometry commands, the multicore GPU comprising at least a first core and a second core, the method comprising:
providing a series of geometry commands in a command buffer, the geometry commands having associated dependency data indicating which of the geometry commands are dependent on the completion of other commands;
reading a first geometry command from the command buffer;
executing the first geometry command using the first core;
reading a second geometry command from the command buffer;
determining that the second geometry command is not dependent on the results of the first geometry command; and
in response, executing the second geometry command using the second core.

According to another aspect, there is provided a method of operating a multicore graphics processing unit, hereinafter GPU, according to claim 1.

This approach means that multiple geometry commands from the same command buffer can be processed in an overlapping manner (in time), by multiple cores. That is, the second core at least begins executing the second geometry command while the first core is still executing the first geometry command. The cores share the same command buffer.

The results of each geometry processing command may comprise a plurality of tile control lists (tile control streams) - one tile control list for each tile of a plurality of tiles making up a rendering space. Each tile control list may be written to a memory, for subsequent processing (by the same core, or another core) in a fragment processing phase.

The second geometry command is after the first geometry command in the command buffer. The first and second geometry commands may be consecutive geometry commands. That is, there may be no other geometry commands between the first and second geometry commands, in the command buffer. However, there may be other items in the command buffer, between the first and second geometry commands. These other items may include update commands and dependency indicators, as discussed below.

In general, the "other" commands on which geometry commands may be dependent may be other geometry commands or other commands of other types.

The present method is not limited in scope to two cores. In general, any number of cores may be configured to execute geometry commands in an overlapping fashion, having first checked the dependencies of those commands.

The method may comprise maintaining a write offset, denoting the position in the command buffer at which new commands should be written by a client driver.

The method may comprise maintaining: a first read offset, denoting the position at which the first core should read the next geometry command that it is to execute; a second read offset, denoting the position at which the second core should read the next geometry command that it is to execute; and a dependency offset, denoting the earliest dependency in the series of geometry commands that has not yet been satisfied.

The dependency offset is less than or equal to the write offset. It is greater than or equal to the earliest read offset. A read offset may be advanced when the respective core has finished executing a geometry command.

Determining that the second geometry command is not dependent on the results of the first geometry command may be based on the dependency data. Determining that the second geometry command is not dependent on the results of the first geometry command optionally comprises: advancing the second read offset until it reaches either the second geometry command or the dependency offset; comparing the second read offset with the dependency offset; and if the second read offset is less than the dependency offset, determining that the second geometry command is not dependent on the results of the first geometry command.

The method may further comprise, when the first core finishes executing the first geometry command: advancing the first read offset beyond the second read offset, until it reaches either a third geometry command or the dependency offset; if the first read offset reaches the third geometry command, determining that the third geometry command is not dependent on the results of the second geometry command; and in response, executing the third geometry command using the first core.

The dependency may be determined in the same manner as explained before.

The command buffer may also include at least one dependency indicator, indicating that a geometry command following the dependency indicator is dependent on another command. (In this case, it should be understood that the dependency data referred to earlier comprises the at least one dependency indicator.) The method may further comprise advancing the dependency offset to the earliest dependency indicator in the command buffer whose dependency is not yet satisfied.

The command buffer optionally also includes at least one update command, wherein the at least one update command is executed by the core that has executed the earliest unexecuted geometry command in the series. This will be the core with the earliest (lowest) read offset.

Update commands are not executed by a core whose read offset is greater than the earliest read offset. Update commands are also known as "fence updates".

Update commands may be used to inform the client driver that certain commands have been executed and/or certain dependencies have been satisfied. By ensuring that the dependency updates are only updated by the "trailing" core, the method can avoid executing the update commands prematurely. Executing an update command too early may result in incorrect rendering, because the client driver will assume that all commands prior to the update command have already been executed. This would be true in a single-core implementation, but might not be true in the current multicore case.

Optionally: the first core is configured to write the results of geometry commands that it executes to a first parameter buffer; and the second core is configured to write the results of geometry commands that it executes to a second parameter buffer, separate from the first parameter buffer.

A parameter buffer is a region of memory that stores the results of geometry processing commands. It may be allocated during geometry processing and consumed during fragment processing. Allocation may be dynamic. Each parameter buffer may include any one, or any combination of two or more, of: tile control stream data, parameter block data, and allocation list data. Parameter block data describes transformed primitives. Tile control stream data defines the order and other formatting details of parameter block data. Allocation list data tracks the allocation of memory for the parameter block data and tile control stream data.

Each parameter buffer may be subdivided and used by multiple renders. This enables one part of the parameter buffer to be written to (by the associated core) while another part of the parameter buffer is read (for example, by another core performing fragment processing).

Fragment processing may be performed by cores of the multicore GPU to execute fragment processing commands based on the results of geometry commands executed by the first core. Both the first core and another core may be configured to execute fragment processing commands based on the results of geometry commands executed by the first core. The another core may be the second core.

Likewise, both the second core and another core may be configured to execute fragment processing commands based on the results of geometry commands executed by the second core. In this case, the another core may be the first core.

When processing the results of a given geometry command, each core may execute fragment processing for a different subset of tiles of the rendering space. That is, each core may read and process a different subset of the tile control lists produced by a given geometry command.

Each of the cores may be configured to perform geometry processing and fragment processing. In some examples, the cores may be identical in their construction. That is, they may contain identical hardware and they may differ only the functions that they are configured to perform (by software or firmware).

The GPU may comprise one or more additional cores configured to execute fragment processing commands.

The another core may be configured to, when it finishes processing the results of a geometry command executed by the first core, signal this to the first core, wherein the first core is configured to, in response to receiving the signal from the another core, free the memory that was used to store the respective results.

When the another core is the second core, the second core sends the signal to the first core. Likewise, when finishing processing the results of a geometry command executed by the second core, the another core may signal this to the second core. The second core may, in response, free the memory that was used to store the respective results. In this case, when the another core is the first core, the first core sends the signal to the second core.

In each case, the core responsible for freeing the memory is the core that executed the respective geometry command. The core responsible for freeing the memory may wait until all other cores have finished processing the results of the geometry command before freeing the memory that was used to store the results of that geometry command. That is, the core that executes the geometry command may wait until the associated fragment processing is completed (by all cores executing fragment processing) before freeing the memory storing the results of that geometry command.

To enable this functionality, it will be noted that the core that executes a geometry command may be one of the cores that executes the associated fragment processing.

Optionally: a first affinity is set for the first geometry command such that, if the first core is interrupted while executing the first geometry command, the first geometry command will only resume processing on the first core, and a second affinity is set for the second geometry command such that, if the second core is interrupted while executing the second geometry command, the second geometry command will only resume processing on the second core.

In other words, the first geometry command will not resume processing on any core other than the first core, once it has started executing that core. Likewise, the second geometry command will not resume processing on any core other than the second core, once it has started executing on that core. This ensures that the first core can always retain responsibility for the allocation and deallocation of memory associated with the first geometry command. Any core executing fragment processing based on the output of the first geometry command only ever needs to signal the first core to notify it that the fragment processing is complete. (And the same goes for the second geometry command and second core, respectively.) Setting an affinity may also help to reduce memory access bandwidth. If a geometry command has an affinity for a particular core where it has already been partially processed, primitive data associated with the geometry command may already have been loaded by that core into a local cache, and may still be available in that local cache when processing resumes.

Geometry processing on any given core may be interrupted due to, for example multitasking and context switching.

The first and second geometry commands may relate to different frames. The different frames may be successive frames of a video sequence or animated sequence, for example.

The first and second geometry commands may relate to the same frame. In some cases, a single frame may include multiple geometry kicks (commands). Provided there is no dependency between these kicks, they may be processed in an overlapping manner.

The command buffer may be a circular command buffer. Each of the read, write, and dependency offsets may be configured to wrap from the end of the buffer to the start of the buffer, in this case. It should be understood that any references to "earlier" or "later" commands and "lower" or "higher" read, write, or dependency offsets are to take into account the possibility of such wrapping.

Also provided is a multicore graphics processing unit, hereinafter GPU, configured to enable overlapping processing of geometry commands during tile-based rendering, the multicore GPU comprising at least a first core and a second core, and a command buffer,
wherein the command buffer is configured to hold a series of geometry commands written by a client driver, the geometry commands having associated dependency data indicating which of the geometry commands are dependent on the completion of other commands;
wherein the first core is configured to:
   read a first geometry command from the command buffer, and
   execute the first geometry command;
and wherein the second core is configured to:
   read a second geometry command from the command buffer,
   determine that the second geometry command is not dependent on the results of the first geometry command, and
   in response, execute the second geometry command.

Also provided is a multicore graphics processing unit, hereinafter GPU, according to claim 11.

Optionally: the first core is configured to maintain a first read offset, denoting the position at which the first core should read the next geometry command that it is to execute; the second core is configured to maintain a second read offset, denoting the position at which the second core should read the next geometry command that it is to execute; and the GPU is configured to maintain a dependency offset, denoting the earliest dependency in the series of geometry commands that has not yet been satisfied.

The command buffer may also include at least one update command, wherein each of the first core and the second core is configured to execute the at least one update command only if that core has just executed the earliest unexecuted geometry command in the series.

The core may determine this by comparing its own read offset with the read offset of the other core(s) doing geometry processing. The core with the earliest (lowest) read offset should execute the update command.

There is also provided a method of operating a multicore graphics processing unit, hereinafter GPU, configured to perform tile-based rendering, to enable overlapping processing of geometry commands, the multicore GPU comprising at least a first core and a second core, the method comprising:
providing a series of geometry commands in each of a plurality of command buffers, the geometry commands having associated dependency data indicating which of the geometry commands are dependent on the completion of other commands;
reading a first geometry command from one of the command buffers;
executing the first geometry command using the first core;
reading a second geometry command from one of the command buffers;
determining that the second geometry command is not dependent on the results of the first geometry command; and
in response, executing the second geometry command using the second core. The second geometry command may be read from the same command buffer as the first geometry command, or it may be read from a different command buffer. The determination may be based on the dependency data and/or whether the commands come from the same buffer.

There is also provided a method of operating a multicore graphics processing unit, hereinafter GPU, configured to perform tile-based rendering, to enable overlapping processing of geometry commands, the multicore GPU comprising at least a first core and a second core, the method comprising:
providing a series of geometry commands in each of a plurality of command buffers;
reading a first geometry command from one of the command buffers;
executing the first geometry command using the first core;
reading a second geometry command from another of the command buffers; and
executing the second geometry command using the second core.

Also provided is a graphics processing system comprising a GPU as summarised above and/or configured to perform a method as summarised above. The graphics processing system may be embodied in hardware on an integrated circuit.

Also provided is a method of manufacturing, using an integrated circuit manufacturing system, a graphics processing system as summarised above.

Also provided is a method of manufacturing, using an integrated circuit manufacturing system, a graphics processing system as summarised above, the method comprising: processing, using a layout processing system, a computer readable description of the graphics processing system so as to generate a circuit layout description of an integrated circuit embodying the graphics processing system; and manufacturing, using an integrated circuit generation system, the graphics processing system according to the circuit layout description.

Also provided is computer readable code configured to cause a method as summarised above to be performed when the code is run on a multicore GPU having a command buffer. Also provided is a computer readable storage medium (optionally non-transitory) having encoded thereon the computer readable code.

Also provided is an integrated circuit definition dataset that, when processed in an integrated circuit manufacturing system, configures the integrated circuit manufacturing system to manufacture a graphics processing system as summarised above.

Also provided is a computer readable storage medium having stored thereon a computer readable description of a graphics processing system as summarised above that, when processed in an integrated circuit manufacturing system, causes the integrated circuit manufacturing system to manufacture an integrated circuit embodying the graphics processing system.

Further provided is a computer readable storage medium (optionally non-transitory) having stored thereon a computer readable description of a graphics processing system as summarised above which, when processed in an integrated circuit manufacturing system, causes the integrated circuit manufacturing system to: process, using a layout processing system, the computer readable description of the graphics processing system so as to generate a circuit layout description of an integrated circuit embodying the graphics processing system; and manufacture, using an integrated circuit generation system, the graphics processing system according to the circuit layout description.

Still further provided is an integrated circuit manufacturing system configured to manufacture a graphics processing system as summarised above.

Also provided is an integrated circuit manufacturing system comprising: computer readable storage medium (optionally non-transitory) having stored thereon a computer readable description of a graphics processing system as summarised above; layout processing system configured to process the computer readable description so as to generate a circuit layout description of an integrated circuit embodying the graphics processing system; and an integrated circuit generation system configured to manufacture the graphics processing system according to the circuit layout description.

The layout processing system may be configured to determine positional information for logical components of a circuit derived from the integrated circuit description so as to generate a circuit layout description of an integrated circuit embodying the graphics processing system.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 is a block diagram of a GPU according to an example;
Figure 2 illustrates a portion of a circular command buffer for geometry processing, according to an example;
Figure 3 is a flowchart illustrating a method according to an example;
Figure 4 is a flowchart illustrating a further method according to an example;
Figure 5A shows an example of processing geometry sequentially according to a comparative example;
Figure 5B shows an example of processing geometry in parallel according to an example;
Figure 6 shows a computer system in which a graphics processing system is implemented; and
Figure 7 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

In the exemplary tile-based deferred rendering architecture, geometry processing is generally executed on one core, while fragment shading may be distributed across multiple cores. This parallelisation helps to speed up the rendering process. However, in scenes with very complex geometry, and therefore a large volume of geometry data, the geometry processing stage may be the rate-limiting step, since it needs to be carried out on a single core.

The problem becomes more pronounced as the number of cores increases. As fragment shading is divided among a greater number of cores, the benefits of parallel processing mean that it can be completed faster. Therefore, it becomes even more likely that the geometry processing (which cannot simply be parallelised in the same way) becomes the bottleneck. Scalability suffers as a result, because increasing the number of cores delivers less and less benefit, in terms of speeding up the overall rendering process.

A further challenge arises because of the relationship between the graphics pipeline and the applications it services. An application and client driver will issue commands to the GPU in a particular order. The application / client driver is entitled to rely on the understanding that commands will be processed by the GPU in the order that they are issued. If commands are processed out of sequence, unexpected (and erroneous) behaviour may result.

It would be desirable to speed up the rendering of frames with complex geometry, in spite of the difficulties associated with parallelising the geometry processing. It would be particularly desirable to do this without requiring significant changes to the hardware pipeline, and in a manner that is transparent to the client driver. In particular, it would be desirable to continue to meet all of the conditions that are met for the existing client driver, in order that software using the client driver does not have to be rewritten.

Some commands are dependent on the completion of earlier commands, but some are not. For example, in some cases, commands associated with successive frames may be independent of one another. Also, in some cases, the client driver may issue multiple commands within a single frame which are also independent of one another.

In examples according to the present disclosure, firmware of the GPU can analyse the sequence of commands issued by the client driver, to determine which ones are dependent on the results of previous commands and which are not. This information can be extracted from "fences" set by the application or client driver. When the firmware finds a geometry command that is not dependent on the results of previous commands (which have not yet completed executing), it executes that command on the next available core. In the context of tile-based rendering, it will be understood that a geometry command is a command that instigates geometry phase processing. Thus, this allows independent geometry processing to proceed in parallel on multiple cores concurrently.

In particular, the firmware examines the command buffer (which is a circular command buffer - or CCB - in the present implementation). According to the exemplary GPU architecture, the circular command buffer had three pointers associated with it: a write offset, a read offset, and a dependency offset.

The write offset indicates the location where the client driver should write the next command. The read offset indicates the location of the next geometry command in the buffer to be executed. The dependency offset provides a guarantee that nothing before the dependency offset is waiting for any unsatisfied fences. In practice, if it has been updated by the firmware to advance it as far as possible, the dependency offset typically indicates the location of the next command that is dependent on completion of one or more previous commands.

According to the exemplary GPU architecture, several circular command buffers may exist - one for each type of work performed by GPU. For example, as well as the geometry CCB, there may be a fragment CCB for fragment processing commands, and a compute CCB, for compute commands. The dependency offset facilitates synchronisation between the different CCBs. For example, a fragment processing command will be dependent on completion of a respective geometry processing command. A dependency indicator would be inserted in the fragment CCB, to reflect this. Either a fragment processing command or a geometry processing command may depend on the result of a compute command. If so, the fragment CCB or the geometry CCB would contain a dependency indicator to reflect this, as appropriate. It is also possible that that there may be multiple command buffers of the same type - e.g. multiple geometry CCBs. This may occur when different (unrelated) applications issue work to the same GPU, with different command buffers being created for each of the different applications. For the sake of simplicity, the following description assumes the presence of a single geometry command buffer, but it will be understood that when multiple geometry command buffers are present they could each be processed as described.

In examples according to the present disclosure, this capability to track conditional dependencies between different commands in different CCBs is exploited to determine and respect conditional dependencies between different commands in the same CCB - namely, geometry commands in a geometry CCB.

In examples according to the present disclosure, a second read offset is introduced. When the geometry processing for a given geometry command is sent ("kicked") to a first core, the first read offset stops at that command. The firmware keeps moving the second read offset forwards. If it finds a further geometry command before it encounters the dependency offset, then it knows that this command is not dependent on the calculations currently being performed by the first core. It therefore kicks the further geometry command to a second core, to process the geometry in parallel with the ongoing processing in the first core.

In other words, one read offset is provided per core allocated to geometry processing. Whenever the respective core is idle, the firmware advances (that is, moves forward) the read offset for that core, searching for further geometry processing to execute, until the dependency offset is encountered. In this way, geometry processing can be carried out in parallel across multiple cores. The implementation is largely transparent to the client driver. The client driver should not insert unnecessary fences between geometry commands (as that could prevent the full benefit of parallelisation being achieved). At the same time, the client driver should explicitly highlight any implied dependencies within the CCB, using dependency fences where appropriate. In other words, the client driver is expected to be clear about dependencies within the CCB, and to use them sparingly where necessary. If the client driver overstates the dependencies, this may have a negative impact on performance; if the client driver understates the dependencies, it may create the potential for incorrect rendering. Otherwise, the client driver writes commands to the circular command buffer in the same way that it always did. It remains unaware of whether the geometry processing is performed by a single core or by multiple cores.

The commands are processed with no gaps. In other words, each read offset is advanced only until it finds the first non-executed command, which is then executed by the associated core.

Ordinarily, when the geometry processing associated with a particular command has finished executing, the firmware performs "fence updates", to update the client driver about what memory can now be reused by the driver. This behaviour is modified according to examples of the present invention because, ordinarily, the fence updates would lead the client driver to believe that all commands in the command buffer up to this point have now completed executing. This is no longer necessarily the case when the geometry processing associated with different commands is being handled by different cores. The geometry processing for a later command may finish executing while the geometry processing for an earlier command is still ongoing.

To accommodate this in the multicore case, the firmware only performs fence updates based on the trailing read offset. For any read offsets that are ahead of the trailing one, no fence updates are performed when geometry processing finishes. This avoids the risk of incorrect signalling to the client driver.

Some other modifications are also necessary to the memory management mechanisms. Each core handling geometry processing is allocated its own parameter buffer, so that each has control of its own memory pool, independent of the other(s). As explained above, the parameter buffer is filled by performing geometry processing (including tiling), and the contents are consumed during fragment shading.

In the multicore case, a parameter buffer populated by one core doing geometry processing may be consumed by several cores performing fragment shading (possibly including the core that did the geometry processing). Each of these cores performs a fragment shading task that involves fragment shading for one or more tiles. Since the individual (other) cores handling the fragment shading will not have complete knowledge about the use of memory in one parameter buffer - and since they may be handling fragment shading for more than one geometry core (and therefore using more than one parameter buffer) at different times - only the core that originally did the geometry processing is allowed to deallocate the memory. Thus, deallocation is left to the core that is responsible for that particular parameter buffer. This ensures that only the core that has the full overview of the contents of a parameter buffer is able to deallocate memory within that parameter buffer.

When a fragment shading core completes a fragment shading task, it signals to the relevant "master" geometry core that it is finished. The "master" geometry core then deallocates/releases the associated memory space in the parameter buffer, once all of the fragment shading cores have finished their processing.

It is possible that a geometry processing task is interrupted while running on a core. This can occur, in particular, due to multitasking and context switching. For example, firmware may context switch a geometry command if it needs to execute a higher priority geometry command from a more important software application. This is decided at runtime, and the firmware will return to the interrupted geometry command later. When this happens, the interrupted geometry processing task may maintain an affinity for the core on which it was running, such that it will only resume execution on the same core. This helps to simplify the signalling between the fragment shading cores and the geometry cores - the signalling for memory deallocation always goes back to the core that is the "master" for the relevant parameter buffer. There is no risk that ownership of the parameter buffer switches between geometry cores, while a fragment shading core is doing its work.

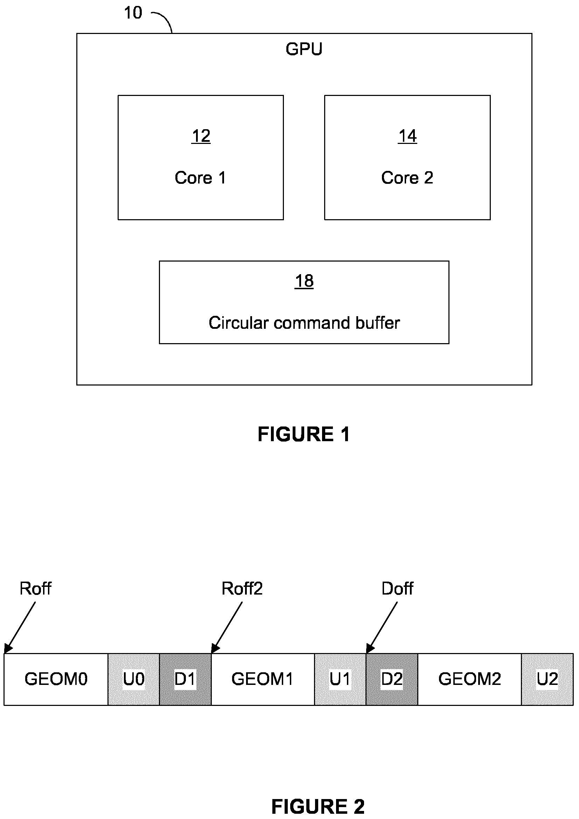

Figure 1 is a simplified schematic block diagram showing a GPU 10 according to an example. The GPU comprises first core 12; a second core 14; and a circular command buffer (CCB) 18. Note that the CCB 18 shown in the drawing is the CCB for geometry commands. The GPU has other CCBs (not shown) for other types of commands.

Figure 2 shows the contents of a part of the CCB 18. A first read offset Roff for the first core is pointing to a first geometry command GEOMO; a second read offset Roff2 for the second core is pointing to a second geometry command GEOM1. The CCB 18 also includes update commands U0, U1, U2 (also known as "fence updates"), and dependency indicators D1, D2. These are set by the client driver. A dependency offset Doff is pointing to the first dependency indicator that has not yet been satisfied, D2. In the example illustrated in Figure 2, the dependency indicator D1 before the second geometry command GEOM1 has already been satisfied (e.g. perhaps by a separate compute command being processed). Accordingly, the second geometry command GEOM1 is not dependent on the results of the first geometry command GEOMO, and these two geometry commands can be processed in an overlapping fashion by the first and second cores, respectively.

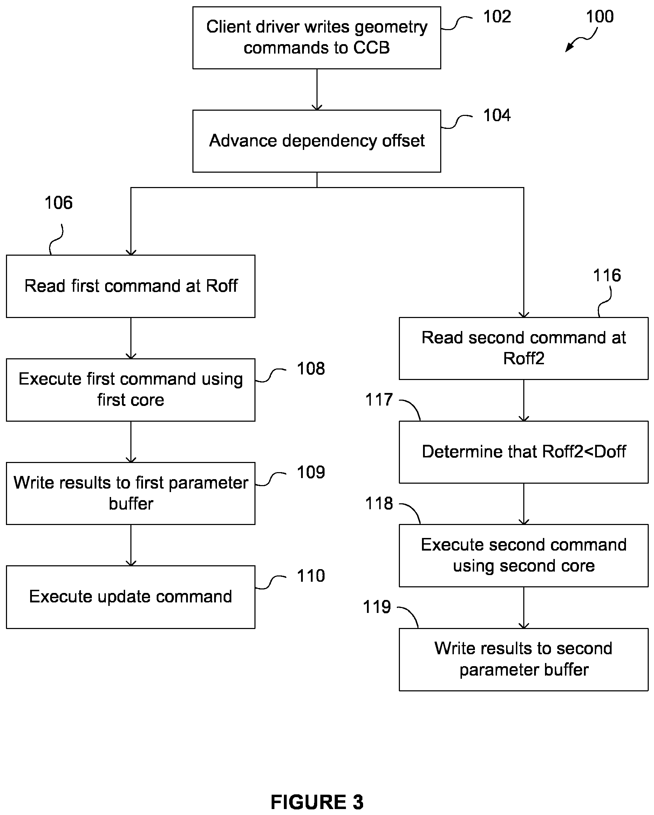

Figure 3 illustrates a method carried out by the GPU 10, based on processing the CCB shown in Figure 2. In step 102, the client driver writes geometry commands to the CCB 18. Each geometry command is written to the CCB at the position pointed to by a write offset Woff (not shown in Figure 2). The write offset is advanced after every command is written. As the command buffer is a circular command buffer in this example, when the write offset reaches the end of the buffer it wraps around back in the start again. (This is true for each of the offset pointers.)

In step 104, the GPU advances the dependency offset Doff to the first dependency indicator that has not yet been satisfied D2. In step 106, the first core 12 reads the first geometry command GEOMO at the first read offset Roff. Meanwhile, the second core 14 advances the second read offset Roff2 to the next geometry command GEOM1. Here, it reads the second geometry command GEOM1. Because it reached the second geometry command GEOM1 before it reached the dependency offset Doff, the second core can determine (in step 117) that the second geometry command GEOM1 does not depend on the output of the first geometry command GEOMO. Once this has been determined, the second core 14 knows that it is safe to execute the second geometry command GEOM1 (irrespective of whether execution of the first geometry command by the first core is completed yet). Having made this determination in step 117, the second core executes the second geometry command in step 118. In the present implementation, the execution of the second geometry command (by the second core) starts shortly after execution of the first geometry command (by the first core) and both proceed in parallel. It does not matter which execution finishes first.

In step 109, the first core 12 writes the results of its geometry processing (executing the first geometry command) to a first parameter buffer. The first parameter buffer is reserved for writing by the first core, and the first core retains responsibility for allocating and deallocating memory in this parameter buffer. Meanwhile, in step 119, the second core 14 writes the results of its geometry processing (executing the second geometry command) to a second parameter buffer. The second parameter buffer is reserved for writing by the second core, and the second core retains responsibility for allocating and deallocating memory in this parameter buffer.

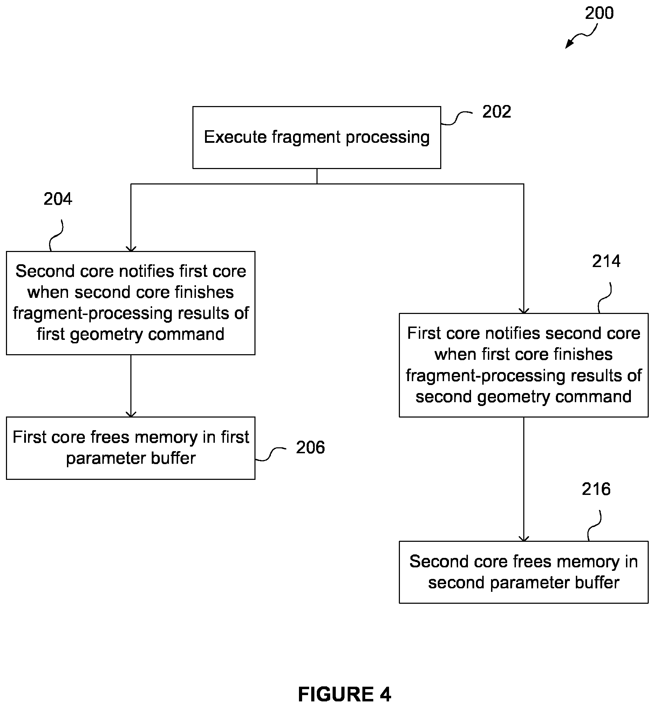

Each core requests a memory allocation for its parameter buffer whenever it needs to write data (in particular, tile control streams and parameter blocks) if it does not have sufficient memory already allocated to write it. The later deallocation of memory will depend on signalling from the other cores performing fragment processing. This will be described with reference to Figure 4.

As explained already above, it is known to parallelise fragment processing. For example, in the present tile-based architecture, fragment processing may be distributed among a plurality of cores by allocating a subset of the tiles to each core. There will typically be several cores handling fragment processing. In the present example, at least the first core 12 is involved in handling fragment processing for the results of its geometry processing. That is, the first core does at least some of the fragment processing for the results of the first geometry command. Likewise, the second core does at least some of the fragment processing for the results of the second geometry command. In addition, there may be cores in the system that are configured to perform fragment processing but not geometry processing. In other examples, the core involved with performing the geometry processing for a command may not be involved with the fragment processing other than to perform the memory deallocation mentioned above and below.

In step 202, fragment processing is executed. Fragment processing is based on the data produced as output in the geometry processing phase. That is, fragment processing consumes the contents of the parameter buffer, which was written in the geometry processing phase. When a given fragment processing command has finished executing, the parameter buffer contents that it has consumed are no longer required, and the associated memory can be freed. According to the present implementation, the core that did the geometry processing work also does some of the fragment processing work. Any other core that is executing the fragment processing signals to the core that originally did the geometry processing work, when it has completed its part of the fragment processing - that is, when execution of the fragment processing command on that other core is finished. In particular, after the second core finishes executing fragment processing based on the results of the first geometry command, it will signal this (in step 204) to the first core. In response, once all cores (including the first core) handling the fragment processing based on the results of the first geometry command have finished the fragment processing, the first core frees the relevant allocated memory in the first parameter buffer (step 206). Likewise, after the first core finishes executing fragment processing based on the results of the second geometry processing command, it will signal this (in step 214) to the second core. In response, once all cores (including the second core) handling the fragment processing based on the results of the second geometry command have finished the fragment processing, the second core will free the relevant allocated memory in the second parameter buffer (in step 216). Because each core has its own parameter buffer, there is no risk of one core deallocating and freeing memory that is still in use by another core.

Referring once again to the exemplary CCB contents shown in Figure 2, let us consider what will happen after the first core finishes executing the first geometry command GEOMO and the second core finishes executing the second geometry command GEOM1. Let us assume that the first core finishes its work first. In the example of Figure 2, the first core will advance the first read offset Roff to the update command U0. Because Roff<Roff2 (i.e. Roff is behind Roff2 in the CCB), the first core executes the fence update command U0. That is, because the first core currently has the trailing read offset, it executes the fence update command (step 110 in Figure 3). Update commands should only be executed once, and they should be executed by the core whose read offset is currently trailing. The first read offset Roff is then advanced again, to reach the second geometry command GEOM1. (Note that the dependency indicator D1 is ignored when advancing Roff - it has already been considered when positioning the dependency offset Doff.) At this point, Roff=Roff2 and Roff2<Doff; therefore, the first core knows that the second core will already be executing the second geometry command GEOM1. The first core therefore skips the second geometry command and advances the first read offset Roff, again. Now, Roff reaches the next update command U1. Because Roff>Roff2 at this point (i.e. Roff is ahead of Roff2 in the CCB), the first core knows that it must skip the fence update. This fence update will be carried out later, by the second core (whose read offset Roff2 is now trailing) when it completes execution of the second geometry command GEOM1. The first read offset Roff is advanced again. It reaches the dependency offset Doff; therefore it stops, as no core should execute any geometry commands beyond the dependency offset.

If the dependency offset Doff could be moved forward at this point, beyond the third geometry command GEOM2, then the first core would advance Roff to this command GEOM2 and would read and execute it.

The second core meanwhile completes execution of the second geometry command GEOM1. The second core will advance the second read offset Roff2 to the fence update command U1. Because Roff2 is the trailing read offset by this stage (that is Roff2<Roff), the second core executes the update command U1.

Note that, in some examples, a geometry command may be split by the client driver into two or more parts. In this case, the parts behave in the same way as when geometry processing is interrupted while running on a core - the subsequent parts maintain an affinity for the core that processed the first part. Splitting by the client driver may occur for various reasons. For example, the client driver may wish to pause one geometry command, start another, and return to the first one later.

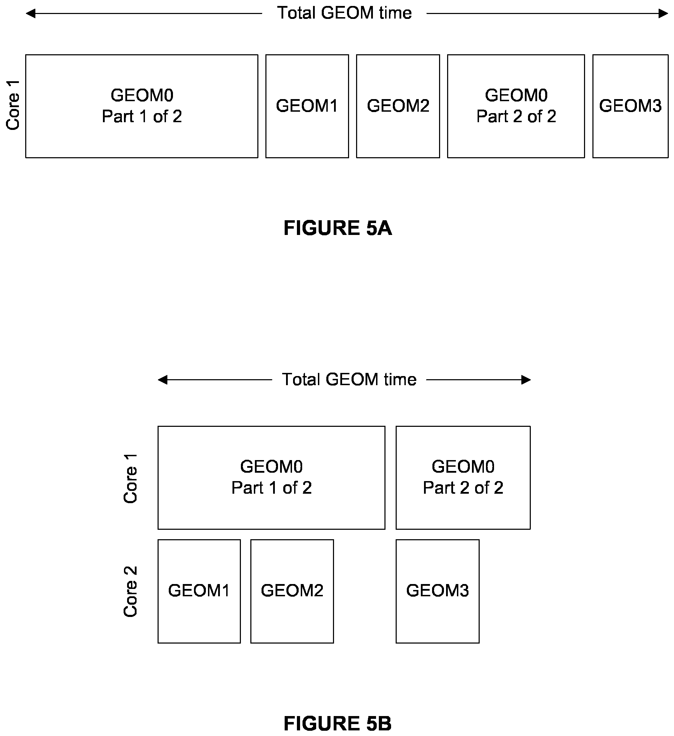

The two cores doing geometry processing can proceed in this way, skipping ahead of one another, until all of the geometry processing work is complete. This pattern of overlapping execution has the potential to significantly increase the throughput of geometry processing. This will be explained by reference to the comparative example illustrated schematically in Figure 5A, and the example illustrated in Figure 5B. In Figure 5A, geometry commands are executed sequentially by a single core. The total time taken is the sum of the times taken to execute individual commands. GEOMO is executed in two parts. This may be a result of context switching, or a result of splitting of the command into two parts by the client driver, as explained above. In Figure 5B, independent geometry commands are executed by two cores according to the pattern explained above. The total time taken in this example is the sum of the times taken for the two parts of GEOMO (since these are now executed sequentially by Core 1, and this takes longer than the execution of GEOM1, GEOM2 and GEOM3 by Core 2). Note that the second part of GEOMO executes on the same core as the first part, following the rule about affinity explained below.

Thus, it can be seen that, according to the present example, geometry processing can be scaled effectively across multiple cores. This can be done without requiring the client driver to make any decisions about how to divide up the work.

As mentioned previously above, once a core has started executing a given geometry command, that command has an "affinity" set for that core. This means that, if the execution is interrupted (for example, due to multitasking and/or context switching) it will only resume on that same core, and not any other core. This simplifies memory management and can also help to reduce the use of memory access bandwidth. The cores performing fragment processing do not need to check whether geometry processing has been interrupted on a first core and resumed on a second core (in which case the second core would become responsible for deallocating and freeing the associated parameter buffer space). A core performing fragment processing has a guarantee that one specific core was responsible for the geometry processing and that the same core remains responsible for tidying up the memory management. Additionally, if a geometry processing command is interrupted and resumes on the same core, it is possible that some of the primitive data that was being processed by the command may still persist in a cache of that core. This may help to avoid reading it from external memory a second time after resumption.

It should be understood that the scope of the present disclosure is not limited to the examples above. Many variations are possible, including but not limited to the following.

The examples described above used two cores for geometry processing; however, it should be understood that this is non-limiting - a greater number of geometry cores could be used in other examples.

Although the command buffer in the present implementation is a circular command buffer, this is not essential. Other suitable memory structures might include a linked list, for example.

In the present implementation, geometry cores are started strictly sequentially. That is, each core is only started after the others have started their geometry processing. This may be beneficial for simplicity of design and implementation; however, it is not essential. Geometry cores could start their geometry processing simultaneously, in some implementations.

As mentioned earlier, it is possible for multiple geometry command buffers to be present, and each buffer may be processed by multiple cores as described above. That is, multiple different cores may work on the different command buffers at the same time (i.e. because there are no dependencies between the commands in one geometry CCB and another geometry CCB).

Moreover, depending on the workloads and core availabilities, the different buffers may each be processed by different single cores in parallel. It may even be the case that those cores swap workloads, e.g. if it is preferable to only use a specific core for geometry processing if the other core(s) are busy. So, in an example scenario, a first core 'core0' may be working on a first command buffer 'CCB0' and so a second core 'core1' starts working on another command buffer 'CCB1'. When core0 stops working on CCB0 (either because all the CCB0 commands have been processed or because an unfulfilled dependency has been met) it may start processing CCB1. That processing may continue in parallel with core1 also processing CCB1 or, if it becomes desirable to use core1 for something else, core1 may cease processing CCB1 so that core0 is processing CCB1 alone. Further, assuming core0 stopped processing CCB0 due to an unfulfilled dependency, and that dependency is fulfilled after both core0 begins working on CCB1 and core 1 has stopped working on CCB1, core1 may then start processing CCBO, such that both command buffers are now being processed in parallel again, but now by different cores compared to the start of the scenario.

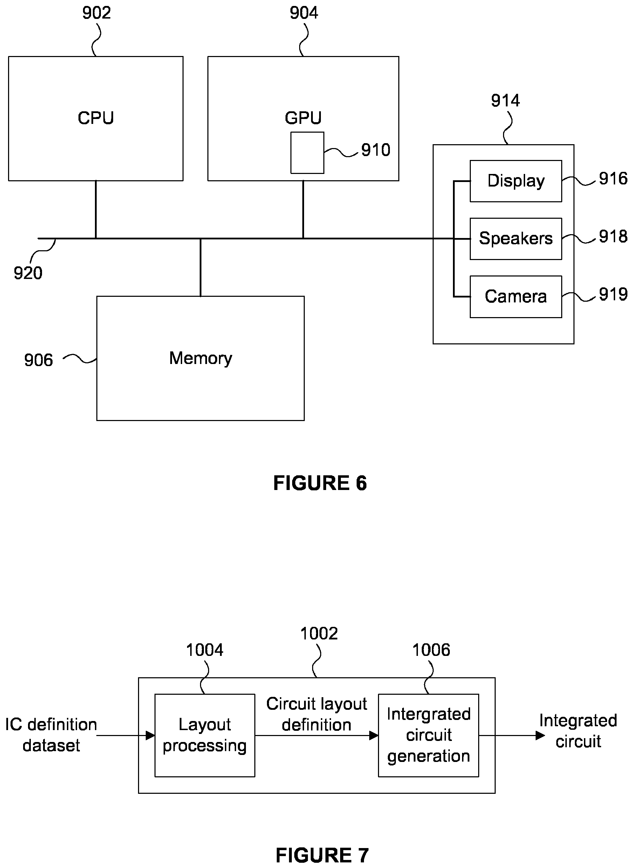

Figure 6 shows a computer system in which the graphics processing systems described herein may be implemented. The computer system comprises a CPU 902, a GPU 904, a memory 906 and other devices 914, such as a display 916, speakers 918 and a camera 919. A processing block 910 (corresponding to GPU 10) is implemented on the GPU 904. The components of the computer system can communicate with each other via a communications bus 920.

The GPU of Figure 1 is shown as comprising a number of functional blocks. This is schematic only and is not intended to define a strict division between different logic elements of such entities. Each functional block may be provided in any suitable manner. It is to be understood that intermediate values described herein as being formed by a GPU need not be physically generated by the GPU at any point and may merely represent logical values which conveniently describe the processing performed by the GPU between its input and output.

The GPUs described herein may be embodied in hardware on an integrated circuit. The GPUs described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java^{®} or OpenCL. Executable code may be, for example, any kind of software, firmware, script, module or library which, when suitably executed, processed, interpreted, compiled, executed at a virtual machine or other software environment, cause a processor (in particular, a GPU) of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a GPU configured to perform any of the methods described herein, or to manufacture a GPU comprising any apparatus described herein. An integrated circuit definition dataset may be, for example, an integrated circuit description.

Therefore, there may be provided a method of manufacturing, at an integrated circuit manufacturing system, a GPU as described herein. Furthermore, there may be provided an integrated circuit definition dataset that, when processed in an integrated circuit manufacturing system, causes the method of manufacturing a GPU to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a GPU will now be described with respect to Figure 7.

Figure 7 shows an example of an integrated circuit (IC) manufacturing system 1002 which is configured to manufacture a GPU as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a GPU as described in any of the examples herein), process the IC definition dataset, and generate an IC according to the IC definition dataset (e.g. which embodies a GPU as described in any of the examples herein). The processing of the IC definition dataset configures the IC manufacturing system 1002 to manufacture an integrated circuit embodying a GPU as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a GPU without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 7 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 7, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of operating a multicore graphics processing unit, hereinafter GPU (10), configured to perform tile-based rendering, to enable overlapping processing of geometry commands, the multicore GPU comprising at least a first core (12) and a second core (14), the method comprising:
providing, by a client driver, (102) a series of geometry commands in a command buffer (18), the geometry commands having associated dependency data indicating which of the geometry commands are dependent on the completion of other commands;
reading by the first core (106) a first geometry command from the command buffer (18);
starting to execute (108) the first geometry command using the first core (12);
reading by the second core (116) a second geometry command from the command buffer (18);
after reading (116) the second geometry command from the command buffer (18), determining by the second core (117) that the second geometry command is not dependent on the results of the first geometry command; and
in response, starting to execute (118) the second geometry command using the second core.

2. The method of claim 1, comprising maintaining a write offset, denoting the position in the command buffer (18) at which new commands should be written by a client driver.

3. The method of claim 1 or claim 2, comprising maintaining:
a first read offset (Roff), denoting the position at which the first core (12) should read the next geometry command that it is to execute;
a second read offset (Roff2), denoting the position at which the second core (14) should read the next geometry command that it is to execute; and
a dependency offset (Doff), denoting the earliest dependency in the series of geometry commands that has not yet been satisfied.

4. The method of claim 3, wherein determining that the second geometry command is not dependent on the results of the first geometry command comprises:
advancing the second read offset (Roff2) until it reaches either the second geometry command or the dependency offset;
comparing the second read offset (Roff2) with the dependency offset (Doff);
if the second read offset is less than the dependency offset, determining (117) that the second geometry command is not dependent on the results of the first geometry command; and
otherwise, determining that the second geometry command is dependent on the results of the first geometry command.

5. The method of claim 3 or claim **4,** further comprising, when the first core (12) finishes executing the first geometry command:
advancing the first read offset (Roff) beyond the second read offset, until it reaches either a third geometry command or the dependency offset;
if the first read offset reaches the third geometry command, determining that the third geometry command is not dependent on the results of the second geometry command; and
in response, executing the third geometry command using the first core.

6. The method of any one of the preceding claims, wherein the command buffer also includes at least one dependency indicator (D1, D2), indicating that a geometry command following the dependency indicator is dependent on another command, and optionally wherein the method further comprises advancing the dependency offset (Doff) to the earliest dependency indicator in the command buffer whose dependency is not yet satisfied.

7. The method of any one of the preceding claims, wherein the command buffer also includes at least one update command (U0, U1, U2),
wherein the at least one update command is executed (110) by the core that has just executed the earliest geometry command in the series that was, immediately prior to the completion of its execution, the earliest unexecuted geometry command in the series.

8. The method of any one of the preceding claims, wherein
the first core (12) is configured to write (109) the results of geometry commands that it executes to a first parameter buffer; and
the second core (14) is configured to write (119) the results of geometry commands that it executes to a second parameter buffer, separate from the first parameter buffer, and optionally
wherein each parameter buffer is subdivided and used by multiple renders.

9. The method of any one of the preceding claims wherein both the first core and one or more other cores are configured to execute (202) fragment processing commands based on the results of geometry commands executed by the first core (12), and optionally:
wherein each of the one or more other cores is configured to, when it finishes processing the results of a geometry command executed by the first core, signal (204) this to the first core; and
wherein the first core (12) is configured to, in response to finishing the fragment processing commands and receiving the signal from each core of said at least one other core, free (206) the memory that was used to store the respective results.

10. The method of any one of the preceding claims, wherein:
a first affinity is set for the first geometry command such that, if the first core is interrupted while executing the first geometry command, the first geometry command will only resume processing on the first core, and
a second affinity is set for the second geometry command such that, if the second core is interrupted while executing the second geometry command, the second geometry command will only resume processing on the second core.

11. A multicore graphics processing unit, hereinafter GPU (10), configured to enable overlapping processing of geometry commands during tile-based rendering, the multicore GPU comprising at least a first core (12) and a second core (14), and a command buffer (18),
wherein the command buffer (18) is configured to hold a series of geometry commands written by a client driver, the geometry commands having associated dependency data (D1, D2) indicating which of the geometry commands are dependent on the completion of other commands;
wherein the first core (12) is configured to:
read (106) a first geometry command from the command buffer, and
start to execute (108) the first geometry command;
and wherein the second core is configured to:
read (116) a second geometry command from the command buffer,
after reading the second geometry command from the command buffer, determine (117) that the second geometry command is not dependent on the results of the first geometry command, and
in response, start to execute (118) the second geometry command.

12. The multicore GPU of claim 11, wherein:
the first core (12) is configured to maintain a first read offset (Roff), denoting the position at which the first core should read (106) the next geometry command that it is to execute;
the second core (14) is configured to maintain a second read offset (Roff2), denoting the position at which the second core should read (116) the next geometry command that it is to execute; and
the GPU (10) is configured to maintain a dependency offset (Doff), denoting the earliest dependency in the series of geometry commands that has not yet been satisfied.

13. The multicore GPU of claim 11 or claim 12, wherein the command buffer (18) also includes at least one update command (U0, U1, U2),
wherein each of the first core (12) and the second core (14) is configured to execute the at least one update command only if that core has just executed the earliest geometry command in the series that was, immediately prior to its execution, the earliest unexecuted geometry command in the series.

14. A graphics processing system comprising the GPU of any one of claims 11-13 and/or configured to perform the method of any of claims 1 to 10.

15. Computer readable code configured to cause the method of any of claims 1 to 10 to be performed when the code is run on a multicore GPU having a command buffer.

## Patentansprüche

1. Verfahren zum Betreiben einer Mehrkern-Grafikverarbeitungseinheit, im Folgenden GPU (10), die so eingerichtet ist, dass sie ein kachelbasiertes Rendern durchführt, um eine überlappende Verarbeitung von Geometriebefehlen zu ermöglichen, wobei die Mehrkern-GPU mindestens einen ersten Kern (12) und einen zweiten Kern (14) umfasst, wobei das Verfahren Folgendes umfasst:
Bereitstellen, durch einen Client-Treiber, (102) einer Reihe von Geometriebefehlen in einem Befehlspuffer (18), wobei die Geometriebefehle verknüpfte Abhängigkeitsdaten aufweisen, die angeben, welche der Geometriebefehle von der Ausführung anderer Befehle abhängen;
Lesen, durch den ersten Kern, (106) eines ersten Geometriebefehls aus dem Befehlspuffer (18),
Starten des Ausführens (108) des ersten Geometriebefehls unter Verwendung des ersten Kerns (12);
Lesen, durch den zweiten Kern, (116) eines zweiten Geometriebefehls aus dem Befehlspuffer (18),
nach dem Lesen (116) des zweiten Geometriebefehls aus dem Befehlspuffer (18), Ermitteln, durch den zweiten Kern, (117) dass der zweite Geometriebefehl nicht von den Ergebnissen des ersten Geometriebefehls abhängt; und
in Reaktion darauf, das Starten des Ausführens (118) des zweiten Geometriebefehls unter Verwendung des zweiten Kerns.

2. Verfahren nach Anspruch 1, umfassend das Unterhalten eines Schreibversatzes, der die Position in dem Befehlspuffer (18) bezeichnet, an der neue Befehle durch einen Client-Treiber geschrieben werden sollen.

3. Verfahren nach Anspruch 1 oder Anspruch 2, umfassend das Unterhalten:
eines ersten Leseversatzes (Roff), der die Position bezeichnet, an der der erste Kern (12) den nächsten Geometriebefehl lesen soll, den er ausführen soll;
eines zweiten Leseversatzes (Roff2), der die Position bezeichnet, an der der zweite Kern (14) den nächsten Geometriebefehl lesen soll, den er ausführen soll; und
eines Abhängigkeitsversatzes (Doff), der die früheste Abhängigkeit in der Reihe von Geometriebefehlen bezeichnet, die noch nicht erfüllt ist.

4. Verfahren nach Anspruch 3, wobei das Ermitteln, dass der zweite Geometriebefehl nicht von den Ergebnissen des ersten Geometriebefehls abhängt, Folgendes umfasst:
Voranbewegen des zweiten Leseversatzes (Roff2), bis er entweder den zweiten Geometriebefehl oder den Abhängigkeitsversatz erreicht;
Vergleichen des zweiten Leseversatzes (Roff2) mit dem Abhängigkeitsversatz (Doff);
wenn der zweite Leseversatz kleiner als der Abhängigkeitsversatz ist, Ermitteln (117), dass der zweite Geometriebefehl nicht von den Ergebnissen des ersten Geometriebefehls abhängt; und
anderenfalls, Ermitteln, dass der zweite Geometriebefehl von den Ergebnissen des ersten Geometriebefehls abhängt.

5. Verfahren nach Anspruch 3 oder Anspruch 4, das ferner Folgendes umfasst, wenn der erste Kern (12) das Ausführen des ersten Geometriebefehls beendet:
Voranbewegen des ersten Leseversatzes (Roff) über den zweiten Leseversatz hinaus, bis er entweder einen dritten Geometriebefehl oder den Abhängigkeitsversatz erreicht;
wenn der erste Leseversatz den dritten Geometriebefehl erreicht, Ermitteln, dass der dritte Geometriebefehl nicht von den Ergebnissen des zweiten Geometriebefehls abhängt; und
in Reaktion darauf, Ausführen des dritten Geometriebefehls unter Verwendung des ersten Kerns.

6. Verfahren nach einem der vorhergehenden Ansprüche, wobei der Befehlspuffer auch mindestens einen Abhängigkeitsindikator (D1, D2) enthält, der angibt, dass ein auf den Abhängigkeitsindikator folgender Geometriebefehl von einem anderen Befehl abhängt, und wobei das Verfahren optional ferner das Voranbewegen des Abhängigkeitsversatzes (Doff) zu dem frühesten Abhängigkeitsindikator in dem Befehlspuffer umfasst, dessen Abhängigkeit noch nicht erfüllt ist.

7. Verfahren nach einem der vorhergehenden Ansprüche, wobei der Befehlspuffer auch mindestens einen Aktualisierungsbefehl (U0, U1, U2) enthält,
wobei der mindestens eine Aktualisierungsbefehl von dem Kern ausgeführt wird (110), der gerade den frühesten Geometriebefehl in der Reihe ausgeführt hat, der unmittelbar vor der Vollendung seiner Ausführung der früheste nicht ausgeführte Geometriebefehl in der Reihe war.

8. Verfahren nach einem der vorhergehenden Ansprüche, wobei
der erste Kern (12) so eingerichtet ist, dass er die Ergebnisse von Geometriebefehlen, die er ausführt, in einen ersten Parameterpuffer schreibt (109); und
der zweite Kern (14) so eingerichtet ist, dass er die Ergebnisse von Geometriebefehlen, die er ausführt, in einen zweiten Parameterpuffer schreibt (119), der von dem ersten Parameterpuffer getrennt ist, und optional
wobei jeder Parameterpuffer unterteilt ist und von mehreren Rendern verwendet wird.

9. Verfahren nach einem der vorhergehenden Ansprüche, wobei sowohl der erste Kern als auch ein oder mehrere andere Kerne so eingerichtet sind, dass sie Fragmentverarbeitungsbefehle basierend auf den Ergebnissen von Geometriebefehlen ausführen (202), die durch den ersten Kern (12) ausgeführt werden, und optional:
wobei jeder aus dem einen oder den mehreren anderen Kernen so eingerichtet ist, dass er, wenn er die Verarbeitung der Ergebnisse eines von dem ersten Kern ausgeführten Geometriebefehls beendet, dies dem ersten Kern zu signalisiert (204); und
wobei der erste Kern (12) so eingerichtet ist, dass er als Reaktion auf das Beenden der Fragmentverarbeitungsbefehle und das Empfangen des Signals von dem jeweiligen Kern aus dem mindestens einen anderen Kern den Speicher freigibt (206), der zum Speichern der jeweiligen Ergebnisse verwendet wurde.

10. Verfahren nach einem der vorhergehenden Ansprüche, wobei:
eine erste Affinität für den ersten Geometriebefehl eingestellt wird, sodass, wenn der erste Kern bei der Ausführung des ersten Geometriebefehls unterbrochen wird, die Verarbeitung des ersten Geometriebefehls nur auf dem ersten Kern fortgesetzt wird, und
eine zweite Affinität für den zweiten Geometriebefehl eingestellt wird, sodass, wenn der zweite Kern bei der Ausführung des zweiten Geometriebefehls unterbrochen wird, die Verarbeitung des zweiten Geometriebefehls nur auf dem zweiten Kern fortgesetzt wird.

11. Mehrkern-Grafikverarbeitungseinheit, im Folgenden GPU (10), die so eingerichtet ist, dass sie eine überlappende Verarbeitung von Geometriebefehlen bei einem kachelbasierten Rendering ermöglicht, wobei die Mehrkern-GPU mindestens einen ersten Kern (12) und einen zweiten Kern (14) und einen Befehlspuffer (18) umfasst,
wobei der Befehlspuffer (18) so eingerichtet ist, dass er eine Reihe von Geometriebefehlen enthält, die von einem Client-Treiber geschrieben werden, wobei die Geometriebefehle verknüpfte Abhängigkeitsdaten (D1, D2) aufweisen, die angeben, welche der Geometriebefehle von der Fertigstellung anderer Befehle abhängen;
wobei der erste Kern (12) eingerichtet ist zum:
Lesen (106) eines ersten Geometriebefehls aus dem Befehlspuffer und
Starten des Ausführens (108) des ersten Geometriebefehls;
und wobei der zweite Kern konfiguriert ist zum:
Lesen (116) eines zweiten Geometriebefehls aus dem Befehlspuffer,
nach dem Lesen des zweiten Geometriebefehls aus dem Befehlspuffer, Ermitteln (117), dass der zweite Geometriebefehl nicht von den Ergebnissen des ersten Geometriebefehls abhängt, und
in Reaktion darauf, Beginnen, den zweiten Geometriebefehl auszuführen (118).

12. Mehrkern-GPU nach Anspruch 11, wobei:
der erste Kern (12) so eingerichtet ist, dass er einen ersten Leseversatz (Roff) unterhält, der die Position bezeichnet, an der der erste Kern den nächsten Geometriebefehl lesen (106) soll, den er ausführen soll;
der zweite Kern (14) so eingerichtet ist, dass er einen zweiten Leseversatz (Roff2) unterhält, der die Position bezeichnet, an der der zweite Kern den nächsten Geometriebefehl lesen (116) soll, den er ausführen soll; und
die GPU (10) so eingerichtet ist, dass sie einen Abhängigkeitsversatz (Doff) unterhält, der die früheste Abhängigkeit in der Reihe von Geometriebefehlen bezeichnet, die noch nicht erfüllt ist.

13. Mehrkern-GPU nach Anspruch 11 oder Anspruch 12, wobei der Befehlspuffer (18) auch mindestens einen Aktualisierungsbefehl (U0, U1, U2) enthält,
wobei sowohl der erste Kern (12) als auch der zweite Kern (14) so eingerichtet sind, dass sie den mindestens einen Aktualisierungsbefehl nur dann ausführen, wenn dieser Kern gerade den frühesten Geometriebefehl in der Reihe ausgeführt hat, der unmittelbar vor seiner Ausführung der früheste nicht ausgeführte Geometriebefehl in der Reihe war.

14. Grafikverarbeitungssystem, das die GPU nach einem der Ansprüche 11-13 umfasst und/oder so eingerichtet ist, dass es das Verfahren nach einem der Ansprüche 1 bis 10 ausführt.

15. Computerlesbarer Code, der so eingerichtet ist, dass er die Ausführung des Verfahrens nach einem der Ansprüche 1 bis 10 veranlasst, wenn der Code auf einer Mehrkern-GPU ausgeführt wird, die einen Befehlspuffer aufweist.

## Revendications

1. Procédé de mise en oeuvre d'une unité de traitement graphique multinoyau, ci-après la GPU (10), configurée pour effectuer un rendu à base de tuiles, pour permettre un traitement de chevauchement de commandes géométriques, la GPU multinoyau comprenant l'au moins un premier noyau (12) et un deuxième noyau (14), le procédé comprenant :
la fourniture, par un pilote client, (102) d'une série de commandes géométriques dans un tampon de commandes (18), les commandes géométriques ayant des données de dépendance associées indiquant lesquelles des commandes géométriques sont dépendantes de l'achèvement d'autres commandes ;
la lecture par le premier noyau (106) d'une première commande de géométrie à partir du tampon de commande (18) ;
le démarrage de l'exécution (108) de la première commande géométrique à l'aide du premier noyau (12) ;
la lecture par le deuxième noyau (116) une deuxième commande de géométrie à partir du tampon de commande (18) ;
après la lecture (116) de la deuxième commande géométrique à partir du tampon de commande (18), la détermination par le deuxième noyau (117) que la deuxième commande de géométrie ne dépend pas des résultats de la première commande de géométrie ; et
en réponse, le démarrage de l'exécution (118) de la deuxième commande géométrique à l'aide du deuxième noyau.

2. Procédé selon la revendication 1, comprenant le maintien d'un décalage d'écriture, désignant la position dans le tampon de commande (18) à laquelle de nouvelles commandes doivent être écrites par un pilote client.

3. Procédé selon la revendication 1 ou la revendication 2, comprenant le maintien de :
un premier décalage de lecture (Roff), désignant la position à laquelle le premier noyau (12) doit lire la commande de géométrie suivante qu'il doit exécuter ;
un deuxième décalage de lecture (Roff2), désignant la position à laquelle le deuxième noyau (14) doit lire la commande de géométrie suivante qu'il doit exécuter ; et
un décalage de dépendance (Doff), désignant la dépendance la plus précoce dans la série de commandes géométriques qui n'a pas encore été satisfaite.

4. Procédé selon la revendication 3, dans lequel la détermination de la deuxième commande géométrique ne dépend pas des résultats de la première commande de géométrie comprenant :
l'avancement du deuxième décalage de lecture (Roff2) jusqu'à ce qu'il atteigne la deuxième commande de géométrie ou le décalage de dépendance ;
la comparaison du deuxième décalage de lecture (Roff2) avec le décalage de dépendance (Doff) ;
si le deuxième décalage de lecture est inférieur au décalage de dépendance, la détermination (117) que la deuxième commande de géométrie ne dépend pas des résultats de la première commande de géométrie ; et
sinon, déterminer que la deuxième commande de géométrie dépend des résultats de la première commande de géométrie.

5. Procédé selon la revendication 3 ou la revendication 4, comprenant en outre, lorsque le premier noyau (12) termine d'exécuter la première commande de géométrie :
l'avancement du premier décalage de lecture (Roff) au-delà du deuxième décalage de lecture, jusqu'à ce qu'il atteigne soit une troisième commande de géométrie soit le décalage de dépendance ;
si le premier décalage de lecture atteint la troisième commande de géométrie, la détermination que la troisième commande de géométrie ne dépend pas des résultats de la deuxième commande de géométrie ; et
en réponse, l'exécution de la troisième commande géométrique à l'aide du premier noyau.

6. Procédé selon l'une quelconque des revendications précédentes, dans lequel le tampon de commande comprend également l'au moins un indicateur de dépendance (D1, D2), indiquant qu'une commande de géométrie suivant l'indicateur de dépendance dépend d'une autre commande, et dans lequel le procédé comprend en outre l'étape consistant à faire avancer le décalage de dépendance (Doff) vers l'indicateur de dépendance le plus précoce dans le tampon de commande dont la dépendance n'est pas encore satisfaite.

7. Procédé selon l'une quelconque des revendications précédentes, dans lequel le tampon de commande comprend également l'au moins une commande de mise à jour (U0, U1, U2),
dans lequel l'au moins une commande de mise à jour est exécutée (110) par le noyau qui vient d'exécuter la commande de géométrie la plus précoce dans la série qui était, immédiatement avant l'achèvement de son exécution, la commande de géométrie non exécutée la plus précoce dans la série.

8. Procédé selon l'une quelconque des revendications précédentes, dans lequel
le premier noyau (12) est configuré pour écrire (109) les résultats de commandes géométriques qu'il exécute sur un premier tampon de paramètres ; et
le deuxième noyau (14) est configuré pour écrire (119) les résultats de commandes géométriques qu'il exécute dans un deuxième tampon de paramètres, séparé du premier tampon de paramètres, et facultativement
dans lequel chaque tampon de paramètres est subdivisé et utilisé par des rendus multiples.

9. Procédé selon l'une quelconque des revendications précédentes, dans lequel à la fois le premier noyau et un ou plusieurs autres noyaux sont configurés pour exécuter (202) des commandes de traitement de fragments sur la base des résultats de commandes géométriques exécutées par le premier noyau (12), et facultativement :
dans lequel chacun des un ou plusieurs autres noyaux est configuré pour, lorsqu'il termine le traitement des résultats d'une commande de géométrie exécutée par le premier noyau, signaler (204) cela au premier noyau ; et
dans lequel le premier noyau (12) est configuré pour, en réponse à la fin des commandes de traitement de fragment et à la réception du signal provenant de chaque noyau dudit au moins un autre noyau, libérer (206) la mémoire qui a été utilisée pour stocker les résultats respectifs.

10. Procédé selon l'une quelconque des revendications précédentes, dans lequel :
une première affinité est établie pour la première commande de géométrie de sorte que, si le premier noyau est interrompu pendant l'exécution de la première commande de géométrie, la première commande de géométrie reprendra uniquement le traitement sur le premier noyau, et
une deuxième affinité est établie pour la deuxième commande de géométrie de sorte que, si le deuxième noyau est interrompu pendant l'exécution de la deuxième commande de géométrie, la deuxième commande de géométrie ne reprendra que le traitement sur le deuxième noyau.

11. L'invention concerne une unité de traitement graphique à noyaux multiples, désignée dans ce qui suit par GPU (10), configurée pour permettre le traitement de chevauchement de commandes géométriques pendant le rendu à base de mosaïques, la GPU à noyaux multiples comprenant l'au moins un premier noyau (12) et un deuxième noyau (14), et un tampon de commande (18)
dans lequel le tampon de commandes (18) est configuré pour contenir une série de commandes géométriques écrites par un pilote client, les commandes géométriques ayant des données de dépendance associées (D1, D2) indiquant lesquelles des commandes géométriques sont dépendantes de l'achèvement d'autres commandes ;
dans lequel le premier noyau (12) est configuré pour :
lire (106) une première commande de géométrie à partir du tampon de commande, et ncommencer à exécuter (108) la première commande de géométrie ;
et dans lequel le deuxième noyau est configuré pour :
lire (116) une deuxième commande de géométrie à partir du tampon de commande,
après la lecture de la deuxième commande de géométrie à partir du tampon de commande, déterminer (117) que la deuxième commande de géométrie ne dépend pas des résultats de la première commande de géométrie, et
en réponse, commencer à exécuter (118) la deuxième commande de géométrie.

12. GPU à noyaux multiples selon la revendication 11, dans lequel :
le premier noyau (12) est configuré pour maintenir un premier décalage de lecture (Roff), désignant la position à laquelle le premier noyau doit lire (106) la commande géométrique suivante qu'il doit exécuter ;
le deuxième noyau (14) est configuré pour maintenir un deuxième décalage de lecture (Roff2), désignant la position à laquelle le deuxième noyau doit lire (116) la commande géométrique suivante qu'il doit exécuter ; et
la GPU (10) est configurée pour maintenir un décalage de dépendance (Doff), désignant la dépendance la plus précoce dans la série de commandes géométriques qui n'a pas encore été satisfaite.

13. GPU à noyaux multiples selon la revendication 11 ou la revendication 12, dans lequel le tampon de commande (18) comprend également l'au moins une commande de mise à jour (U0, U1, U2),
dans lequel chacun du premier noyau (12) et du deuxième noyau (14) est configuré pour exécuter la au moins une commande de mise à jour uniquement si ce noyau vient d'exécuter la commande de géométrie la plus précoce dans la série qui était, immédiatement avant son exécution, la commande de géométrie non exécutée la plus précoce dans la série.

14. Système de traitement graphique comprenant la GPU selon l'une quelconque des revendications 11 à 13 et/ou configuré pour réaliser le procédé selon l'une quelconque des revendications 1 à 10.

15. Code lisible par ordinateur configuré pour amener le procédé de l'une quelconque des revendications 1 à 10 à être réalisé lorsque le code est exécuté sur une GPU multinoyau ayant un tampon de commande.
